# EUROPÄISCHE PATENTSCHRIFT

(11) **EP 3 395 732 B1**
(45) Veröffentlichungstag und Bekanntmachung des Hinweises auf die Patenterteilung: **10.11.2021**
(21) Anmeldenummer: 18000372.5
(22) Anmeldetag: 18.04.2018
(51) Int. Cl.: B65G 47/91, B25J 15/06, B65G 59/04, B65G 61/00

(54) **UMSETZVORRICHTUNG UND VERFAHREN ZUR AUFNAHME EINES QUADERFÖRMIGEN OBJEKTES MIT EINER ENTSPRECHENDEN UMSETZVORRICHTUNG**
TRANSFER DEVICE AND METHOD FOR ATTACHMENT OF A QUADRANGULAR OBJECT WITH A CORRESPONDING TRANSFER DEVICE
DISPOSITIF DE TRANSFERT ET PROCÉDÉ DE RÉCEPTION D'UN OBJET PARALLÉLÉPIPÉDIQUE POURVU D'UN DISPOSITIF DE TRANSFERT CORRESPONDANT

(30) Priorität: 28.04.2017 DE 102017004096
(43) Veröffentlichungstag der Anmeldung: 31.10.2018
(73) Patentinhaber: IWK Verpackungstechnik GmbH, 76297 Stutensee (DE)
(72) Erfinder: Behringer, Thomas, 76467 Bietigheim (DE)
(74) Vertreter: Lichti - Patentanwälte Partnerschaft mbB

(56) Entgegenhaltungen:
- DE-A1- 10 349 021
- JP-A- H1 170 917
- JP-A- 2000 127 074
- US-A- 5 984 623
- US-A1- 2012 169 078

## Beschreibung

Die Erfindung betrifft eine Umsetzvorrichtung insbesondere in einer Tubenfüllmaschine, mit einer verstellbaren Greifvorrichtung, die zumindest einen 1. Sauger aufweist, der mit einem Unterdruck beaufschlagbar und mit der Oberfläche eines aufzunehmenden Objektes an einer 1. Sauger-Anlagefläche in Anlage bringbar ist, wobei der 1. Sauger eine senkrecht zur 1. Sauger-Anlagefläche verlaufende 1. Sauger-Normale definiert, wobei ein 1. Arm wobei vorgesehen ist, der in einem 1. Drehlager um eine Drehachse schwenkbar gelagert ist und einen 1. Armsauger trägt, wobei der 1. Armsauger eine 1. Armsauger-Anlagefläche aufweist und eine senkrecht zur 1. Armsauger-Anlagefläche verlaufende 1. Armsauger-Normale (ASN₁) definiert, die parallel zur Drehachse (D) verläuft, und wobei ein 2. Arm vorgesehen ist, der im Abstand zum 1. Arm angeordnet ist und einen 2. Armsauger trägt, wobei der 2. Armsauger eine 2. Armsauger-Anlagefläche aufweist und eine senkrecht zur 2. Armsauger-Anlagefläche verlaufende 2. Armsauger-Normale (ASN₂) definiert, die parallel zur 1. Armsauger-Normalen (ASN₁) verläuft, wobei der 1. Armsauger und der 2. Armsauger einander zugewandt sind.

Darüber hinaus betrifft die Erfindung ein Verfahren zur Aufnahme eines quaderförmigen Objektes, insbesondere eines Kartons beispielsweise in einer Tubenfüllmaschine, mit einer entsprechenden Umsetzvorrichtung.

In einer Tubenfüllmaschine werden vorgefertigte Tuben-Rohlinge in jeweils einen Tubenhalter eingesetzt und durchlaufen dort mehrere Arbeitsstationen, in denen die Tuben-Rohlinge mit einem üblicherweise pastösen Produkt, beispielsweise einer Creme, gefüllt und anschließend verschlossen werden. Die Tuben-Rohlinge werden in Form eines Gebindes üblicherweise in einer Kiste oder einem Karton angeliefert, in denen die Tuben-Rohlinge vertikal nebeneinander und parallel zueinander unter engere Passung enthalten sind. Im Folgenden soll beispielhaft davon ausgegangen werden, dass die Tuben-Rohlinge in einem Gebinde in Form eines Kartons angeliefert werden, jedoch ist die Erfindung darauf nicht beschränkt.

Um die Tuben-Rohlinge der Tuben-Füllmaschine zuzuführen, wird der Karton auf seiner Oberseite geöffnet, so dass die Tuben-Rohlinge nach oben aus dem Karton entnommen werden können. Diese Arbeit wird in vielen Fällen manuell von einer Bedienperson ausgeführt, die die Tuben-Rohlinge aus dem Karton entnimmt und auf einem weiterführenden Förderer ablegt. Es ist jedoch auch bekannt, die Entnahme der Tuben-Rohlinge automatisch beispielsweise mittels eines Roboters durchzuführen. Zu diesem Zweck muss der geöffnete Karton in einer vorbestimmten Position relativ zum Roboter ausgerichtet werden, so dass der Roboter die Tuben-Rohlinge entnehmen kann. Diese Zuführung und Ausrichtung des Kartons erfolgt üblicherweise manuell.

Ein besonderes Problem bei der Automatisierung dieses Vorgangs liegt darin, dass die Kartons üblicherweise in Form eines großen Gebindes angeliefert werden, in denen mehrere Kartons nebeneinander und übereinander unter enger Packung gestapelt sind. Dabei liegt beispielsweise ein Karton, der in der Ecke einer oberen Lage des Stapels angeordnet ist, mit zwei vertikalen Mantelflächen bzw. Außenoberflächen frei und mit zwei anderen vertikalen Mantelflächen bzw. Außenoberflächen an benachbarten Kartons an, so dass er von einem üblichen Greifer mit zangenartigen Greifelementen nicht aufgenommen werden kann.

Aus der US 5,984,623 A ist eine Umsetzvorrichtung bekannt, die einen 1. Sauger aufweist, der mit einem Unterdruck beaufschlagt und mit der Oberfläche eines aufzunehmenden Objektes in Anlage gebracht werden kann. Zusätzlich sind zwei Arme vorgesehen, die jeweils einen Armsauger tragen. Die Armsauger sind einander zugewandt und einer der Arme kann um eine Achse geschwenkt werden. Um einen Karton mit einer entsprechenden Umsetzvorrichtung aufzunehmen, ist es notwendig, die Umsetzvorrichtung schräg von oben an den Karton heranzuführen und mit einem der Armsauger in Anlage zu bringen. Daraufhin wird die ganze Umsetzvorrichtung um den schwenkbaren Armsauger geschwenkt und die Armsauger werden aufeinander zugefahren, so dass der aufzunehmende Karton zwischen den Armsaugern angeordnet ist.

Dieser Bewegungsablauf ist relativ kompliziert und erfordert, dass die gesamte Umsetzvorrichtung geschwenkt werden muss, was aufgrund der Masse der Umsetzvorrichtung schwierig ist.

DE 103 49 021 A1 offenbart den Oberbegriff des Anspruchs 1.

Der Erfindung liegt die Aufgabe zugrunde, eine Umsetzvorrichtung in einer Tubenfüllmaschine zu schaffen, mit der ein Karton von einem Karton-Stapel sicher und in bewegungstechnisch einfacher Weise entnommen werden kann.

Darüber hinaus soll ein Verfahren zur Aufnahme eines quaderförmigen Objektes und insbesondere eines Kartons in einer Tubenfüllmaschine geschaffen werden, mit dem das Objekt bzw. der Karton zuverlässig und schnell aufgenommen und umgesetzt werden kann.

Diese Aufgabe wird mit einer Umsetzvorrichtung mit den Merkmalen des Anspruchs 1 gelöst. Dabei ist ein 1. Arm vorgesehen, der in einem 1. Drehlager um eine Drehachse schwenkbar gelagert ist und einen 1. Armsauger trägt, wobei die Drehachse senkrecht zur 1. Sauger-Normalen verläuft und wobei der 1. Armsauger eine 1. Armsauger-Anlagefläche aufweist und eine senkrecht zur 1. Armträger-Anlagefläche verlaufende 1. Armsauger-Normale definiert, die parallel zur Drehachse verläuft. Darüber hinaus ist ein 2. Arm vorgesehen, der im Abstand zum 1. Arm angeordnet und in einem 2. Drehlager um die Drehachse oder eine dazu parallele Achse schwenkbar gelagert ist und einen 2. Armsauger trägt, wobei der 2. Armsauger eine 2. Armsauger-Anlagefläche aufweist und eine senkrecht zur 2. Armsauger-Anlagefläche verlaufende 2. Armsauger-Normale definiert, die parallel zur 1. Armsauger-Normalen verläuft. Dabei sind der 1. Armsauger und der 2. Armsauger einander zugewandt und weisen zumindest einen Abstand auf, so dass das aufzunehmende Objekt bzw. der Karton zwischen ihnen angeordnet werden kann.

Der 1. Arm und/oder der 2. Arm ist entlang seiner Drehachse verschiebbar. Da die Drehachse parallel zu der 1. Armsauger-Normalen bzw. der 2. Armsauger-Normalen verläuft, ermöglicht die Verschiebung des 1. Arms und/oder des 2. Arms längs der Drehachse eine Zustellbewegung auf die mit dem 1. Armsauger bzw. dem 2. Armsauger in Kontakt zu bringende Oberfläche des Objektes oder des Kartons. Darüber hinaus ist es auf diese Weise möglich, den gegenseitigen Abstand der Arme an Maßungenauigkeiten der Objekte oder Kartons anzupassen.

Vorzugsweise sollten beide Arme entlang ihrer jeweiligen Drehachse verschieblich sein.

Die erfindungsgemäße Umsetzvorrichtung weist zumindest drei Saugeinheiten auf, die in unterschiedliche Richtungen wirken. Der 1. Sauger wirkt in Richtung der 1. Sauger-Normalen. Der 1. Armsauger und/oder der 2. Armsauger kann aufgrund der Schwenkbarkeit der Arme in eine im wesentlichen horizontale Funktionsstellung oder eine im wesentlichen vertikalen Ruhestellung gebracht werden. Auf diese Weise ist es möglich, dass der 1. Sauger beispielsweise nur mit dem 1. Armsauger zusammenwirkt, der in Richtung der 1. Armsauger-Normalen wirksam ist, die senkrecht zur 1. Sauger-Normalen verläuft. Somit sind zwei verschieblich zueinander wirksame Saugeinheiten vorgesehen. Dies ermöglicht es, das aufzunehmende Objekt, beispielsweise den Karton mit den Tuben-Rohlingen, an zwei senkrecht zueinander verlaufenden Mantelflächen anzusaugen und zu verschieben und dadurch zumindest um ein geringes Maß aus dem eng gepackten Karton-stapel zu lösen. Die Verschiebung des Objektes bzw. des Kartons erfolgt dabei soweit, dass diejenige Mantelfläche des Kartons, die dem 1. Armsauger abgewandt ist, soweit frei kommt, dass der 2. Arm mit dem 2. Armsauger in die Betriebsposition geschwenkt werden kann und dann mit der frei gewordenen Mantelfläche des Objektes bzw. des Kartons in Anlage gebracht wird. Wenn dann sowohl der 1. Sauger als auch die beiden Armsauger aktiviert werden, wird das Objekt bzw. der Karton auf drei Seiten gehalten, was es ermöglicht, ihn aufzunehmen und umzusetzen.

In Weiterbildung der Erfindung kann vorgesehen sein, dass der 1. Arm und der 2. Arm unabhängig voneinander schwenkbar sind, so dass die Arme individuell angesteuert werden können.

In Weiterbildung der Erfindung kann vorgesehen sein, dass die Verschieblichkeit des 1. Arms und des 2. Arms längs ihrer Drehachsen unabhängig voneinander erfolgt.

Vorzugsweise kann der 1. Arm und/oder der 2. Arm als frei auskragender Schwenkarm ausgebildet sein. Somit ist es möglich, dass der 1. Arm an seinem einen Ende in dem 1. Drehlager gelagert ist und an seinem entgegengesetzten Ende den 1. Armsauger trägt. Entsprechend kann der 2. Arm an seinem einen Ende in dem 2. Drehlager drehbar gelagert sein und an seinem entgegengesetzten freien Ende den 2. Armsauger tragen.

In Weiterbildung der Erfindung kann vorgesehen sein, dass der 1. Sauger und der 1. Armsauger zu einer Baueinheit zusammengefasst sind. Zu diesem Zweck kann der 1. Sauger an einem 1. Gehäuse angeordnet sein, wobei der 1. Arm an dem 1. Gehäuse über das 1. Drehlager schwenkbar angebracht ist.

In bevorzugter Ausgestaltung der Erfindung ist vorgesehen, dass dem 1. Sauger ein gleichartiger 2. Sauger parallel geschaltet ist. Der 2. Sauger kann mit dem aufzunehmenden Objekt bzw. dem Karton an einer 2. Sauger-Anlagefläche in Anlage gebracht werden, wobei der 2. Sauger eine senkrecht zur 2. Sauger-Anlagefläche verlaufende 2. Sauger-Normale definiert, die im Abstand und parallel zur 1. Sauger-Normalen verläuft. Der 1. Sauger und der 2. Sauger können somit in gleiche Richtungen, jedoch in einem gegenseitigen Abstand wirksam sein und werden vorzugsweise gleichzeitig mit der gleichen Außenoberfläche oder Mantelfläche des aufzunehmenden Objektes oder Kartons in Anlage gebracht.

Vorzugsweise ist der 2. Sauger an einem 2. Gehäuse angeordnet, wobei der 2. Arm an dem 2. Gehäuse über das 2. Drehlager schwenkbar angebracht ist. Auf diese Weise bilden der 2. Sauger und der 2. Armsauger ebenfalls eine Baueinheit.

Das 1. Gehäuse und das 2. Gehäuse können an einem gemeinsamen Trägerteil angeordnet sein, das vorzugsweise eine Befestigungsvorrichtung aufweist, um das Trägerteil und somit die gesamte Greifvorrichtung an einer Verstellvorrichtung anzubringen. Bei der Verstellvorrichtung kann es sich beispielsweise um einen kollaborativen Roboter (Cobot) handeln. Als kollaborativer Roboter (Cobot) wird ein Handhabungsroboter bezeichnet, der mit Menschen gemeinsam arbeitet und im Produktionsprozess nicht durch Schutzeinrichtungen von diesen getrennt ist. Insbesondere kann der Cobot als Mehrgelenkarm-Roboter ausgebildet sein.

Hinsichtlich des Verfahrens wird die Aufgabe dadurch gelöst, dass der 1. Sauger mit einer 1. Objektfläche des aufzunehmenden Objekts oder Kartons in Anlage gebracht wird und dass der 1. Armsauger mit einer 2. Objektfläche, die senkrecht zur 1. Objektfläche verläuft, in Anlage gebracht wird. Das Objekt bzw. der Karton wird dann mittels des 1. Saugers an der 1. Objektfläche und mittels des 1. Armsaugers an der 2. Objektfläche erfasst und in eine Position umgesetzt oder ohne Anheben verschoben, so dass eine 3. Objektfläche, die entgegengesetzt zur 2. Objektfläche und parallel zu dieser angeordnet ist, zuganglich ist. Der 2. Armsauger wird dann an der 3. Objektfläche mit dem aufzunehmenden Objekt bzw. dem Karton in Anlage gebracht und erfasst diesen. Somit ist das Objekt bzw. der Karton auf drei Seiten mittels des 1. Saugers, mittels des 1. Armsaugers und mittels des 2. Armsaugers erfasst und kann aufgenommen werden.

Im Folgenden soll das Verfahren zur Aufnahme eines Kartons in einzelnen Phasen beispielhaft beschrieben werden. Dabei wird davon ausgegangen, dass derjenige Karton aufgenommen werden soll, der sich in der auf einer Palette befindlichen Lage oder Packung von Kartons in einer Ecke befindet.

Zunächst befindet sich die Greifvorrichtung in ihrer Ausgangsstellung. Der 1. Arm und der 2. Arm sind hochgeschwenkt und somit von dem Karton entfernt. Die Greifvorrichtung wird in Richtung des Kartons bewegt, wobei der 1. Sauger angeschaltet ist, jedoch lediglich Luft ansaugt, da er nicht an einer Oberfläche anliegt. Bei weiterer Verstellung der Greifvorrichtung in Richtung des Kartons kommt der 1. Sauger in Anlage mit einer 1. Mantelfläche des Kartons, wodurch sich im 1. Sauger eine Druckveränderung ergibt. Diese Druckveränderung wird erkannt und die Position der Greifvorrichtung in Richtung der 1. Sauger-Normalen wird gespeichert.

Der 1. Sauger wird dann deaktiviert, so dass er von dem Karton freikommt und die Greifvorrichtung wird von dem Karton zurückgezogen. Anschließend wird der 2. Arm aus seiner hochgefahrenen Stellung in eine im wesentlichen horizontale Stellung um die Drehachse geschwenkt, so dass er mit Abstand vor der zugänglichen seitlichen 2. Mantelfläche des Kartons angeordnet ist.

Daraufhin wird der 2. Armsauger des 2. Arms aktiviert und die Greifvorrichtung wird so seitlich verschoben, bis der 2. Armsauger an der 2. Mantelfläche des Kartons anliegt. Die sich dabei ergebende Druckveränderung wird erkannt und die Position in Richtung der 2. Armsauger-Normalen wird gespeichert. Anschließend wird der 2. Arm wieder nach oben geschwenkt und die Greifvorrichtung fährt in ihre Ausgangsstellung.

Die vorherigen Aktionen dienen dazu, die Position des Kartons zu erfassen. Wenn die Position des Kartons mit anderen Mitteln, beispielsweise mittels einer Kamera und einer elektronischen Bildauswertung erfasst wird, kann auf die bisher beschriebenen Aktionen gegebenenfalls verzichtet werden.

In der Ausgangsstellung der Greifvorrichtung werden der 1. Sauger und der auf Abstand dazu parallel ausgerichtete 2. Sauger aktiviert und die Greifvorrichtung wird in Richtung des Kartons in die vorher gespeicherte Position verfahren, so dass die beiden Sauger und mit der seitlichen 1. Mantelfläche des Kartons in Anlage kommen und diese ansaugen.

Anschließend wird der 2. Arm in seine im wesentlichen horizontale Position geschwenkt und der 2. Armsauger wird aktiviert. Der 2. Arm wird längs der Drehachse verschoben, bis der 2. Armsauger mit der zugeordneten 2. Mantelfläche des Kartons in Anlage steht und diese ansaugt.

Der Karton ist nunmehr an drei Punkten erfasst, nämlich durch den 1. Sauger, den 2. Sauger und den 2. Armsauger. Dies reicht aus, um den Karton entweder auf der Palette P zu verschieben oder um ihn um ein geringes Maß anzuheben und nach einer kurzen Strecke von beispielsweise 10cm wieder abzusetzen..

Durch die Verschiebung bzw. die Umsetzung des Kartons ist die dem 2. Armsauger entgegengesetzte 3. Mantelfläche des Kartons nunmehr frei. Der 1. Arm kann aus seiner vertikal nach oben aufgerichteten Ruhestellung in seine horizontale Betriebsstellung geschwenkt werden, woraufhin der 1. Armsauger aktiviert und der 1. Arm längs der Drehachse in Richtung des Kartons verschoben wird, bis der 1. Armsauger mit der 3. Mantelfläche des Kartons in Anlage kommt und diese ansaugt. Der Karton ist nunmehr durch vier Sauger, nämlich den 1. Sauger und den 2. Sauger an der 1. Mantelfläche, durch den 1. Armsauger an der zur 1. Mantelfläche senkrechten 2. Mantelfläche und durch den 2. Armsauger an der zur 2. Mantelfläche entgegengesetzten, parallelen 3. Mantelfläche fest gehalten. Der Karton kann dann aufgenommen und abtransportiert werden.

Wenn der Karton einen lose aufgesetzten Deckel aufweist, kann der Deckel mittels der Greifvorrichtung 15 in vorgenannter Weise ergriffen und von dem Karton abgehoben werden, um diesen zu öffnen.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: eine perspektivische Ansicht einer Umsetzvorrichtung,
- Fig. 2: die Greifvorrichtung der Umsetzvorrichtung gemäß Figur 1
- Fig. 3: die Aufnahme eines Kartons in einer 1. Phase des Verfahrens,
- Fig. 4: die Aufnahme eines Kartons in einer 2. Phase des Verfahrens,
- Fig. 5: die Aufnahme eines Kartons in einer 3. Phase des Verfahrens,
- Fig. 6: die Aufnahme eines Kartons in einer 4. Phase des Verfahrens,
- Fig. 7: die Aufnahme eines Kartons in einer 5. Phase des Verfahrens,
- Fig. 8: die Aufnahme eines Kartons in einer 6. Phase des Verfahrens,
- Fig. 9: die Aufnahme eines Kartons in einer 7. Phase des Verfahrens,
- Fig. 10: die Aufnahme eines Kartons in einer 8. Phase des Verfahrens,
- Fig. 11: die Aufnahme eines Kartons in einer 9. Phase des Verfahrens und
- Fig. 12: das Abheben eines Deckels von dem Karton.

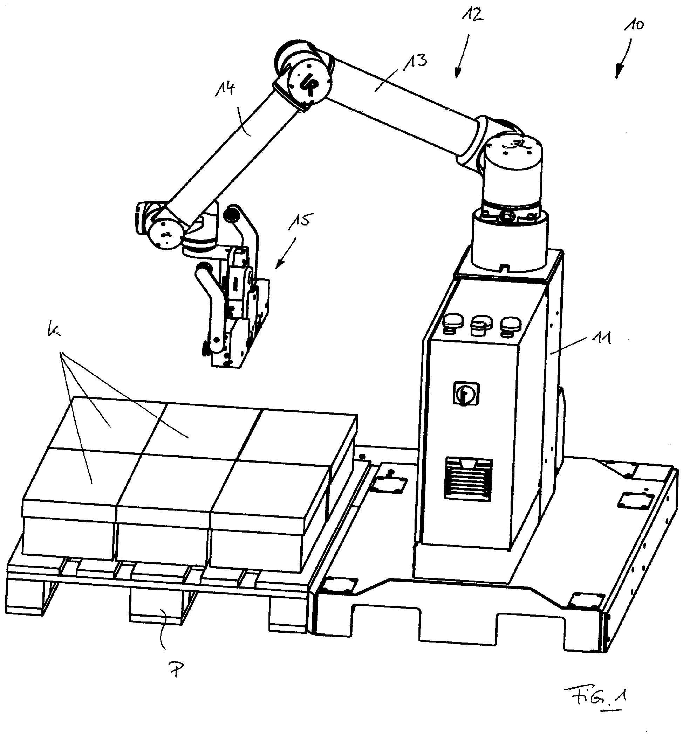

Figur 1 zeigt eine perspektivische Darstellung einer Umsetzvorrichtung 10. Neben der Umsetzvorrichtung 10 ist eine Palette P angeordnet, auf der eine Lage von eng nebeneinander positionierten Kartons K gelagert ist, die beispielsweise jeweils eine Vielzahl von Tuben-Rohlingen enthalten und mittels der Umsetzvorrichtung 10 einzeln aufgenommen und umgesetzt werden sollen.

Die Umsetzvorrichtung 10 besitzt ein Grundgestell 11, an dem ein Roboter 12 gelagert ist. Der Roboter 12 ist als kollaborativer Roboter (Cobot) ausgestaltet und besitzt mehrere relativ zueinander verstellbare und antreibbare Arme 13 und 14. Am freien Ende des Arms 14 ist eine Greifvorrichtung 15 angeordnet, mit der die Kartons K einzeln aufgenommen und umgesetzt werden sollen.

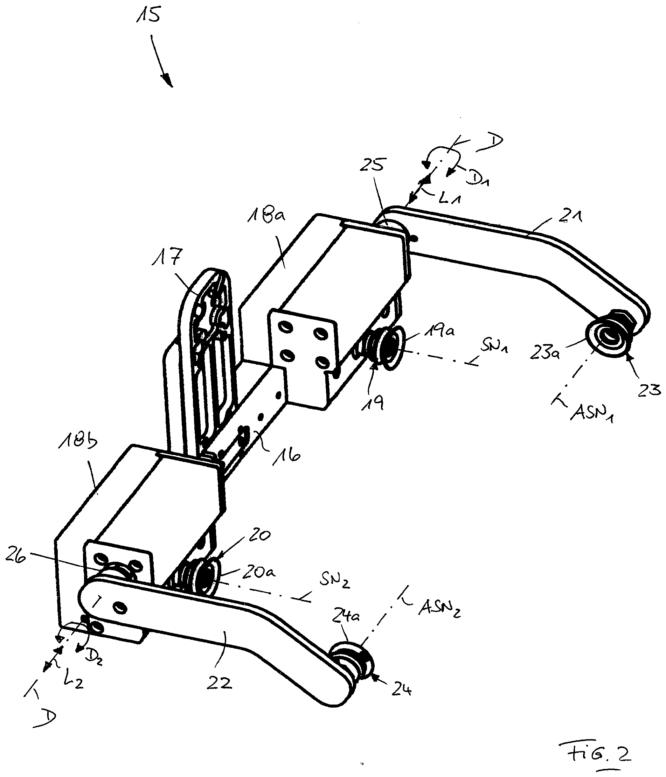

Die Greifvorrichtung 15 ist in Figur 2 im Detail dargestellt. Sie besitzt eine Befestigungsvorrichtung 17, an der die Greifvorrichtung 15 an dem Cobot 12 angebracht werden kann. Die Befestigungsvorrichtung 17 sitzt auf einem Trägerteil 16, an dem zwei auf Abstand nebeneinander angeordnete Gehäuse, nämlich ein 1. Gehäuse 18a und ein 2. Gehäuse 18b gelagert sind. An dem 1. Gehäuse 18a ist ein 1. Sauger 19 üblichen Aufbaus angeordnet, der auf seiner Vorderseite eine 1. Sauger-Anlagefläche 19a besitzt, mit der der 1. Sauger 19 auf eine Oberfläche eines Kartons aufgesetzt werden kann. Der 1. Sauger 19 ist in üblicher Weise mit einem Unterdruck beaufschlagbar. Senkrecht zur 1. Sauger-Anlagefläche 19a verläuft eine 1. Sauger-Normale SN₁, die die Wirkrichtung des 1. Saugers 19 definiert.

Auf der der Befestigungsvorrichtung 17 abgewandten Seite des 1. Gehäuses 18 ist ein 1. Drehlager 25 ausgebildet. Über das 1. Drehlager 25 ist ein 1. Arm 21, der sich in seiner dargestellten Betriebsstellung im wesentlichen parallel zur 1. Sauger-Normale SN₁ erstreckt, um eine Drehachse D schwenkbar gelagert, wie es durch den Doppelpfeil D1 angedeutet ist. Die Drehachse D verläuft in Längsrichtung des Trägerteils 16 und senkrecht zur 1. Sauger-Normalen SN₁.

Am freien, dem 1. Drehlager 25 abgewandten Ende des 1. Arms 21 ist ein 1. Armsauger 23 angeordnet, der in üblicher Weise mit Unterdruck beaufschlagbar ist. Der 1. Armsauger 23 besitzt eine 1. Armsauger-Anlagefläche 23a und definiert eine senkrecht zur 1. Armsauger-Anlagefläche 23a verlaufende 1. Armsauger-Normale ASN₁, die parallel zur Drehachse D verläuft. Auf diese Weise können der 1. Sauger 19 und der 1. Armsauger 23 auf senkrecht zueinander stehenden Seitenflächen des Kartons anliegen.

Der 1. Arm 21 ist im Bereich des 1. Drehlagers 25 in Längsrichtung der Drehachse D verschieblich, wie es durch den Doppelpfeil L₁ angedeutet ist.

Das 2. Gehäuse 18b ist auf der dem 1. Gehäuse 18a abgewandten Seite der Befestigungsvorrichtung 17 auf dem Trägerteil 16 angeordnet und besitzt einen 2. Sauger 20, der in üblicher Weise mit einem Unterdruck beaufschlagbar ist. Der 2. Sauger 20 besitzt eine 2. Sauger-Anlagefläche 20a und definiert eine senkrecht zur 2. Sauger-Anlagefläche 20a verlaufende 2. Sauger-Normale SN₂, die im Abstand und parallel zur 1. Sauger-Normalen SN₁ verläuft. Der 1. Sauger 19 und der 2. Sauger 20 wirken somit in die gleiche Richtung und vorzugsweise liegen die 1. Sauger-Anlagefläche 19a und die 2. Sauger-Anlagefläche 20a in einer Ebene.

Auf der dem 1. Gehäuse 18a abgewandten Seite des 2. Gehäuses 18b ist ein 2. Drehlager 26 ausgebildet, über das ein 2. Arm 22 um die Drehachse D schwenkbar gelagert ist, wie es durch den Doppelpfeil D₂ angedeutet ist. Darüber hinaus kann der 2. Arm 22 längs der Drehachse D verschoben werden, wie es durch den Doppelpfeil L₂ angedeutet ist.

Am freien, dem 2. Drehlager 26 abgewandten Ende des 2. Arms 22 ist ein 2. Armsauger 24 angeordnet, der eine 2. Armsauger-Anlagefläche 24a aufweist, die parallel zur 1. Armsauger-Anlagefläche 23a verläuft und eine senkrecht zur 2. Armsauger-Anlagefläche 24a verlaufende 2. Armsauger-Normale ASN₂ definiert, die im dargestellten Ausführungsbeispiel mit der 1. Armsauger-Normalen ASN₁ zusammenfällt. Der 1. Armsauger 23 und der 2. Armsauger 24 sind einander zugewandt, so dass zwischen ihnen ein Karton aufgenommen werden kann. Über die Verstellung des 1. Arms 21 längs der Drehachse D und/oder die Verstellung des 2. Arms 22 längs der Drehachse D kann der Abstand zwischen dem 1. Armsauger 23 und dem 2. Armsauger 24 angepasst werden.

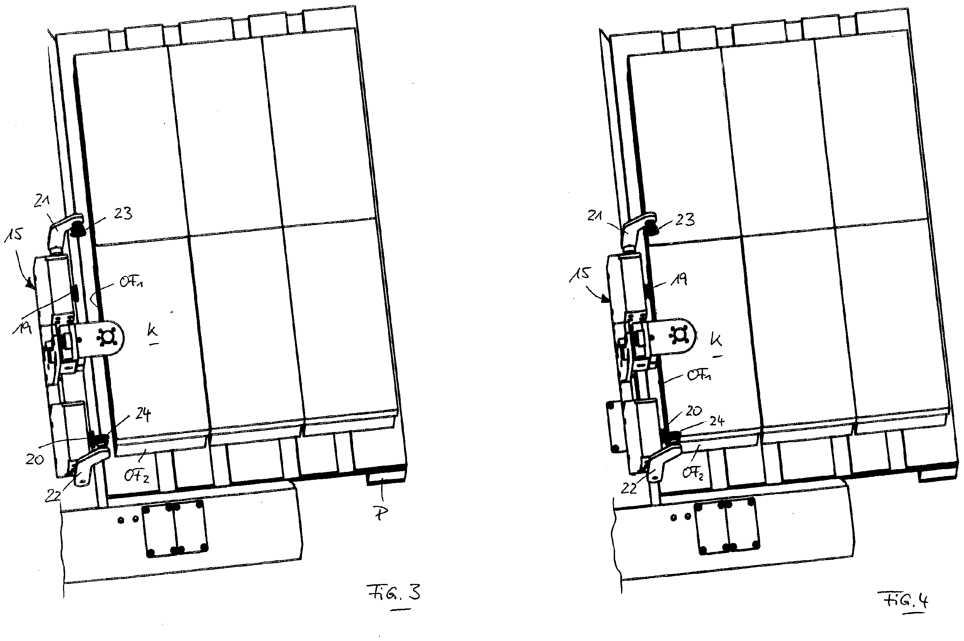

Im Folgenden wird anhand der Figuren 3 bis 11 das Verfahren zur Aufnahme eines Kartons K in einzelnen Phasen beschrieben. Dabei wird davon ausgegangen, dass derjenige Karton K aufgenommen werden soll, der sich in der auf der Palette P befindlichen Lage oder Packung von Kartons in einer Ecke befindet.

Figur 3 zeigt die Greifvorrichtung 15 in ihrer Ausgangsstellung. Der 1. Arm 21 und der 2. Arm 22 sind hochgeschwenkt und somit von dem Karton K entfernt. Die Greifvorrichtung 15 wird in Richtung des Kartons K bewegt, wobei der 1. Sauger 19 angeschaltet ist, jedoch lediglich Luft ansaugt, da er nicht an einer Oberfläche anliegt. Bei weiterer Verstellung der Greifvorrichtung 15 in Richtung des Kartons K kommt der 1. Sauger 19 in Anlage mit einer 1. Mantelfläche OF₁ des Kartons K, wodurch sich im 1. Sauger 19 eine Druckveränderung ergibt. Diese Position ist in Figur 4 dargestellt. Diese Druckveränderung wird erkannt und die Position der Greifvorrichtung 15 in Richtung der 1. Sauger-Normalen SN₁ wird gespeichert.

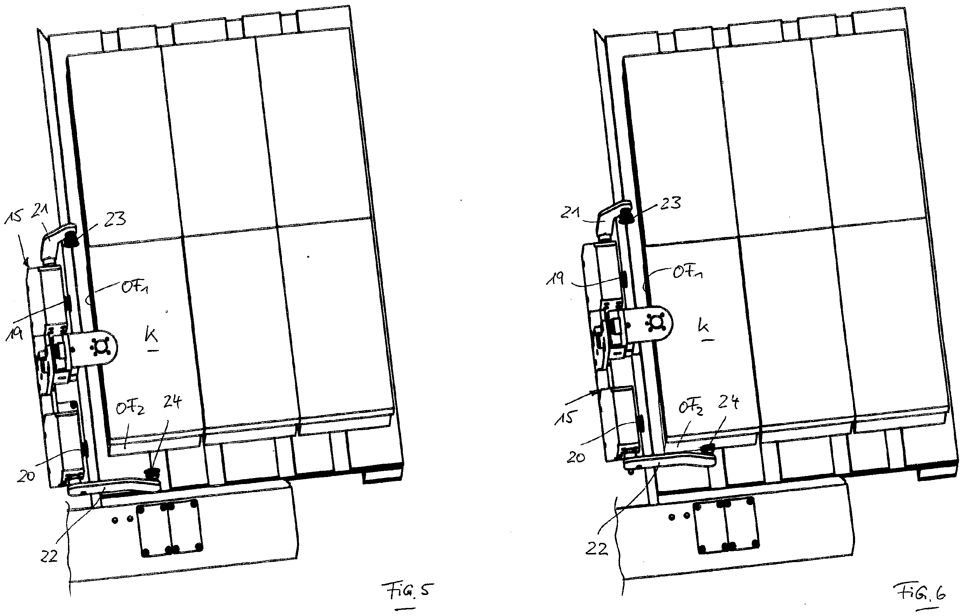

Der 1. Sauger 19 wird deaktiviert, so dass er von dem Karton K freikommt und die Greifvorrichtung 15 wird von dem Karton K zurückgezogen. Anschließend wird der 2. Arm 22 aus seiner hochgefahrenen Stellung in eine im wesentlichen horizontale Stellung um die Drehachse D geschwenkt, so dass er mit Abstand vor einer zugänglichen seitlichen 2. Mantelfläche OF₂ des Kartons K angeordnet ist, wie es in Figur 5 dargestellt ist.

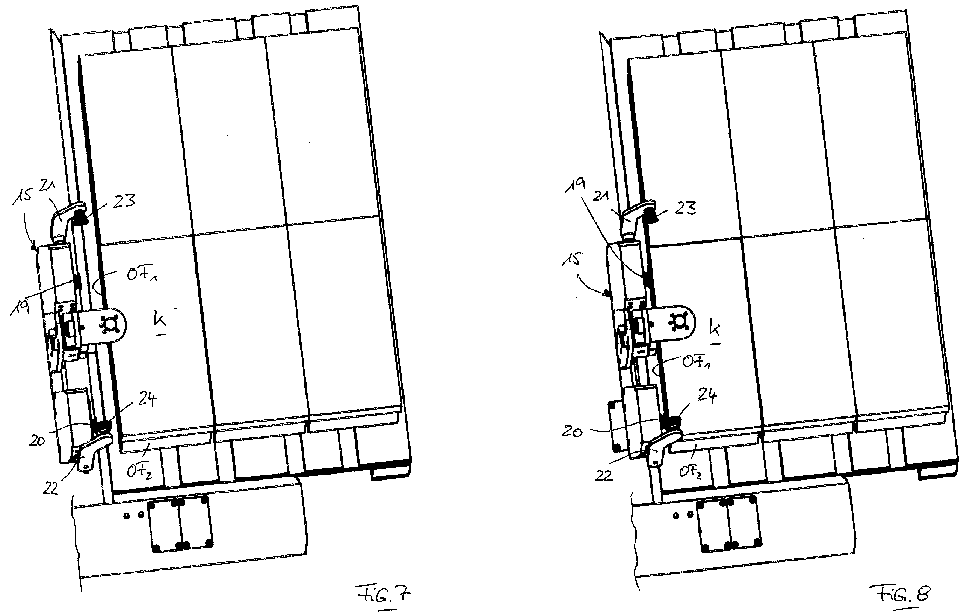

Daraufhin wird der 2. Armsauger 24 des 2. Arms 22 aktiviert und die Greifvorrichtung 15 wird so seitlich verschoben, bis der 2. Armsauger 24 an der 2. Mantelfläche OF₂ des Kartons K anliegt. Diese Position ist in Figur 6 dargestellt. Die sich dabei ergebende Druckveränderung wird erkannt und die Position in Richtung der 2. Armsauger-Normalen ASN₂ wird gespeichert. Anschließend wird der 2. Arm 22 wieder nach oben geschwenkt und die Greifvorrichtung 15 fährt in ihre Ausgangsstellung, wie es in Figur 7 dargestellt ist.

Die vorherigen Aktionen dienten dazu, die Position des Kartons K zu erfassen. Wenn die Position des Kartons K mit anderen Mitteln, beispielsweise mittels einer Kamera und einer elektronischen Bildauswertung erfasst wird, kann auf die bisher beschriebenen Aktionen gegebenenfalls verzichtet werden.

In der in Figur 7 dargestellten Ausgangsstellung werden der 1. Sauger 19 und der auf Abstand dazu parallel ausgerichtete 2. Sauger 20 aktiviert und die Greifvorrichtung 15 wird in Richtung des Kartons K in die vorher gespeicherte Position verfahren, so dass die beiden Sauger 19 und 20 mit der 1. Mantelfläche OF₁ des Kartons K in Anlage kommen und diese ansaugen. Diese Position ist in Figur 8 dargestellt.

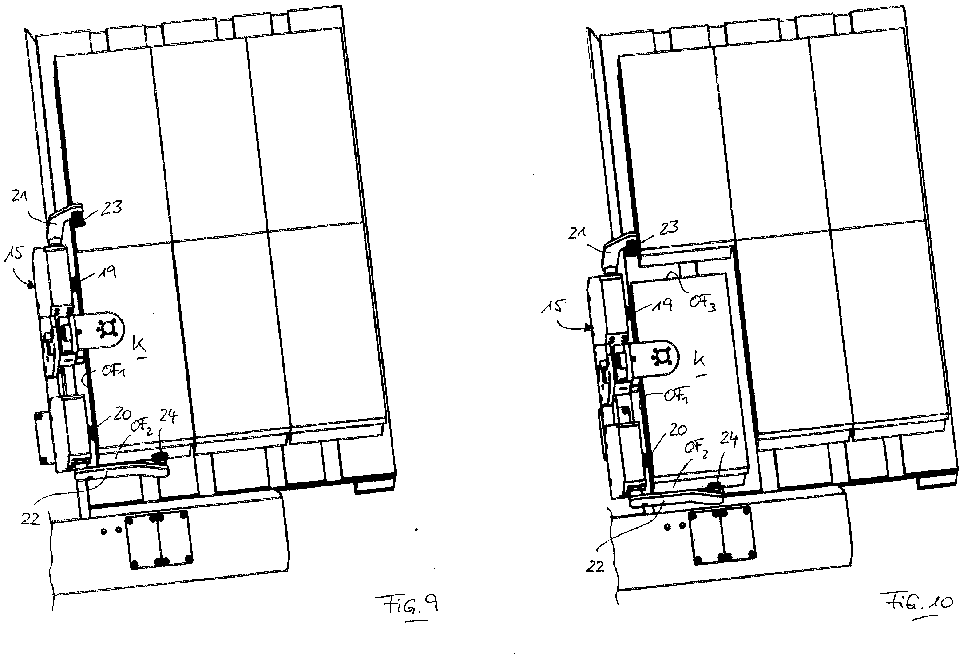

Anschließend wird der 2. Arm 22 in seine im wesentlichen horizontale Position geschwenkt und der 2. Armsauger 24 wird aktiviert. Der 2. Arm 22 wird längs der Drehachse D verschoben, bis der 2. Armsauger 24 mit der zugeordneten 2. Mantelfläche OF₂ des Kartons K in Anlage steht und diese ansaugt, wie es in Fig. 9 dargestellt ist.

Der Karton K ist nunmehr an drei Punkten erfasst, nämlich durch den 1. Sauger 19, den 2. Sauger 20 und den 2. Armsauger 24. Dies reicht aus, um den Karton K entweder auf der Palette P zu verschieben oder um ihn um ein geringes Maß anzuheben und nach einer kurzen Strecke von beispielsweise 10cm wieder abzusetzen. Diese Position ist in Figur 10 dargestellt.

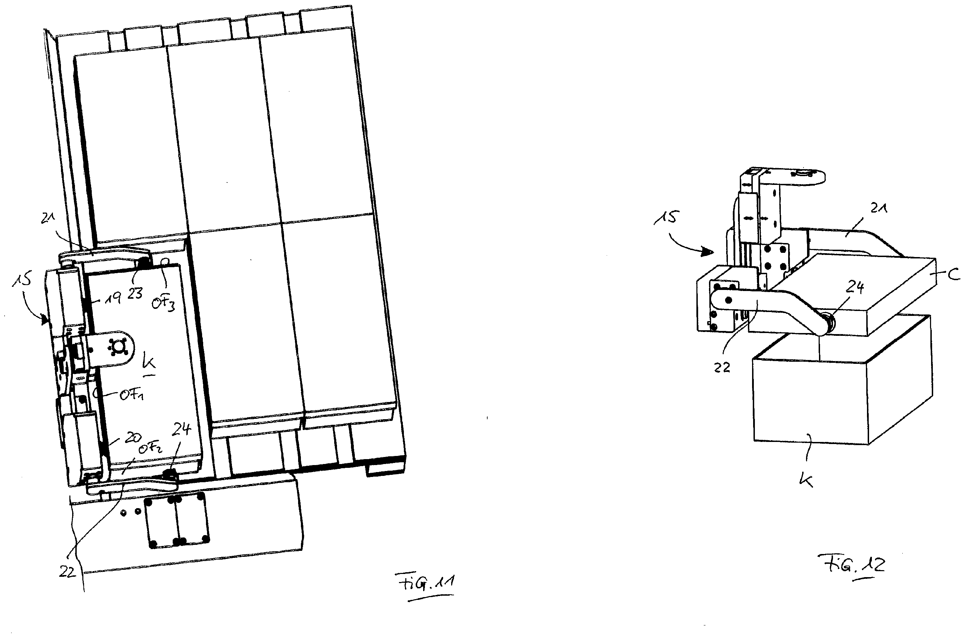

Durch die Verschiebung bzw. die Umsetzung des Kartons K ist eine dem 2. Armsauger 24 entgegengesetzte 3. Mantelfläche OF₃ des Kartons K nunmehr frei. Der 1. Arm 21 kann aus seiner vertikal nach oben aufgerichteten Ruhestellung in seine horizontale Betriebsstellung geschwenkt werden, woraufhin der 1. Armsauger 23 aktiviert und der 1. Arm 21 längs der Drehachse D in Richtung des Kartons K verschoben wird, bis der 1. Armsauger 23 mit der 3. Mantelfläche OF₃ des Kartons K in Anlage kommt und diese ansaugt. Der Karton K ist nunmehr durch vier Sauger, nämlich den 1. Sauger 19 und den 2. Sauger 20 an der 1. Mantelfläche OF₁, durch den 1. Armsauger 23 an der 1. Mantelfläche OF₁ senkrechten 2. Mantelfläche OF₂ und durch den 2. Armsauger 24 an der zur 2. Mantelfläche entgegengesetzten parallelen 3. Mantelfläche OF₃ fest gehalten, wie es in Fig. 11 dargestellt ist. Der Karton K kann dann aufgenommen und abtransportiert werden.

Wenn der Karton K einen lose aufgesetzten Deckel C aufweist, kann der Deckel C mittels der Greifvorrichtung 15 in vorgenannter Weise ergriffen und von dem Karton K abgehoben werden, um diesen zu öffnen. Dies ist in Figur 12 dargestellt.

## Patentansprüche

1. Umsetzvorrichtung, mit einer verstellbaren Greifvorrichtung (15), die zumindest einen 1. Sauger (19) aufweist, der mit einem Unterdruck beaufschlagbar und mit der Oberfläche eines aufzunehmenden Objektes (K) an einer 1. Sauger-Anlagefläche (19a) in Anlage bringbar ist, wobei der 1. Sauger (19) eine senkrecht zur 1. Sauger-Anlagefläche (19a) verlaufende 1. Sauger-Normale (SN₁) definiert, wobei ein 1. Arm (21) vorgesehen ist, der in einem 1. Drehlager (25) um eine Drehachse (D) schwenkbar gelagert ist und einen 1. Armsauger (23) trägt, wobei der 1. Armsauger (23) eine 1. Armsauger-Anlagefläche (23a) aufweist und eine senkrecht zur 1. Armsauger-Anlagefläche (23a) verlaufende 1. Armsauger-Normale (ASN₁) definiert, **dadurch gekennzeichnet, dass** ein 2. Arm (22) vorgesehen ist, der im Abstand zum 1. Arm (23) angeordnet ist und einen 2. Armsauger (24) trägt, wobei der 2. Armsauger (24) eine 2. Armsauger-Anlagefläche (24a) aufweist und eine senkrecht zur 2. Armsauger-Anlagefläche (24a) verlaufende 2. Armsauger-Normale (ASN₂) definiert, die parallel zur 1. Armsauger-Normalen (ASN₁) verläuft, dass der 1. Armsauger (23) und der 2. Armsauger (24) einander zugewandt sind, und, dass die Drehachse (D) senkrecht zur 1. Sauger-Normalen (SN₁) verläuft, dass die 1. Armsauger-Normale (ASN₁) parallel zur Drehachse (D) verläuft, dass der 2. Arm (22) in einem 2. Drehlager (26) um die Drehachse (D) oder eine dazu parallele Achse schwenkbar gelagert ist, dass die 2. Armsauger-Normale (ASN₂) parallel zur Drehachse (D) verläuft und dass der 1. Arm (21) entlang seiner Drehachse (D) und/oder dass der 2. Arm (22) entlang seiner Drehachse (D) verschiebbar ist.

2. Umsetzvorrichtung nach Anspruch 1, **dadurch gekennzeichnet, dass** der 1. Arm (21) und der 2. Arm (22) unabhängig voneinander schwenkbar sind.

3. Umsetzvorrichtung nach Anspruch 1 oder 2, **dadurch gekennzeichnet, dass** der 1. Arm (21) und der 2. Arm (22) unabhängig voneinander entlang ihrer Drehachse (D) verschiebbar sind.

4. Umsetzvorrichtung nach einem der Ansprüche 1 bis 3, **dadurch gekennzeichnet, dass** der 1. Arm (21) an seinem einen Ende mit dem 1. Drehlager (25) drehbar gelagert ist und an seinem entgegengesetzten freien Ende den 1. Armsauger (23) trägt.

5. Umsetzvorrichtung nach einem der Ansprüche 1 bis 4, **dadurch gekennzeichnet, dass** der 2. Arm (22) an seinem einen Ende mit dem 2. Drehlager (26) drehbar gelagert ist und einem seinen entgegengesetzten freien Ende den 2. Armsauger (24) trägt.

6. Umsetzvorrichtung nach einem der Ansprüche 1 bis 5, **dadurch gekennzeichnet, dass** der 1. Sauger (19) an einem 1. Gehäuse (18a) angeordnet ist und dass der 1. Arm (21) an dem 1. Gehäuse (18a) über das 1. Drehlager (25) schwenkbar angebracht ist.

7. Umsetzvorrichtung nach einem der Ansprüche 1 bis 6, **dadurch gekennzeichnet, dass** ein 2. Sauger (20) vorgesehen ist, der mit dem aufzunehmenden Objekt (K) an einer 2. Sauger-Anlagefläche (20a) in Anlage bringbar ist, wobei der 2. Sauger (20) eine senkrecht zur 2. Sauger-Anlagefläche (20a) verlaufende 2. Sauger-Normale (SN₂) definiert, die im Abstand und parallel zur 1. Sauger-Normalen (SN₁) verläuft.

8. Umsetzvorrichtung nach Anspruch 7, **dadurch gekennzeichnet, dass** der 2. Sauger (20) an einem 2. Gehäuse (18b) angeordnet ist und dass der 2. Arm (22) an dem 2. Gehäuse (18b) über das 2. Drehlager (26) schwenkbar angebracht ist.

9. Umsetzvorrichtung nach Anspruch 8, **dadurch gekennzeichnet, dass** das 1. Gehäuse (18a) und das 2. Gehäuse (18b) an einem gemeinsamen Trägerteil (16) angeordnet sind.

10. Umsetzvorrichtung nach einem der Ansprüche 1 bis 9, **dadurch gekennzeichnet, dass** die Greifvorrichtung (15) an einem kollaborativen Roboter (Cobot) (12) angebracht ist.

11. Umsetzvorrichtung nach Anspruch 10, **dadurch gekennzeichnet, dass** der Cobot (12) als Mehrgelenkarm-Roboter ausgebildet ist.

12. Verfahren zur Aufnahme eines quaderförmigen Objektes (K) in einer Tubenfüllmaschine mit einer Umsetzvorrichtung gemäß einem der Ansprüche 1 bis 11, wobei der 1. Sauger (19) mit einer 1. Objektfläche (OF₁) in Anlage gebracht wird, wobei der 1. Armsauger (23) mit einer 2. Objektfläche (OF₂), die senkrecht zur 1. Objektfläche (OF₁) verläuft, in Anlage gebracht wird, wobei das Objekt (K) dann mittels des 1. Saugers (19) an der 1. Objektfläche (OF₁) und mittels des 1. Armsaugers (23) an der 2. Objektfläche (OF₂) erfasst und in eine Position umgesetzt wird, in der eine 3. Objektfläche (OF₃), die entgegengesetzt zur 2. Objektfläche (OF₂) und parallel zu dieser angeordnet ist, zugänglich ist, wobei dann das Objekt (K) zusätzlich mittels des 2. Armsaugers (24) an der 3. Objektfläche OF₃) erfasst und aufgenommen wird.

## Claims

1. Transferring device comprising an adjustable gripping device (15), the gripping device having at least one first suction cup (19) which can be placed under negative pressure and which can be brought into contact with the surface of an object (K) to be picked up on a first suction cup contact surface (19a), the first suction cup (19) defining a first suction cup normal (SN₁) extending perpendicularly to the first suction cup contact surface (19a), a first arm (21) being provided, which is mounted in a first rotary bearing (25) so as to be pivotable about an axis of rotation (D) and bears a first arm suction cup (23), the first arm suction cup (23) having a first arm suction cup contact surface (23a) and defining a first arm suction cup normal (ASN₁) extending perpendicularly to the first arm suction cup contact surface (23a), **characterized in that** a second arm (22) is provided, which is arranged at a distance from the first arm (23) and bears a second arm suction cup (24), the second arm suction cup (24) having a second arm suction cup contact surface (24a) and defining a second arm suction cup normal (ASN₂) extending perpendicularly to the second arm suction cup contact surface (24a), which second arm suction cup normal extends parallel to the first arm suction cup normal (ASN₁), **in that** the 1st arm suction cup (23) and the second arm suction cup (24) are facing each other, and **in that** the axis of rotation (D) extends perpendicularly to the first suction cup normal (SN₁), **in that** the first arm suction cup normal (ASN₁) extends parallel to the axis of rotation (D), **in that** the second arm (22) is mounted in a second rotary bearing (26) so as to be pivotable about the axis of rotation (D) or an axis parallel thereto, **in that** the second arm suction normal (ASN₂) extends parallel to the axis of rotation (D) and **in that** the first arm (21) is displaceable along its axis of rotation (D) and/or **in that** the second arm (22) is displaceable along its axis of rotation (D).

2. Transferring device according to claim 1, **characterized in that** the first arm (21) and the second arm (22) can be pivoted independently of one another.

3. Transferring device according to either claim 1 or claim 2, **characterized in that** the first arm (21) and the second arm (22) are displaceable independently of one another along their axis of rotation (D).

4. Transferring device according to any of claims 1 to 3, **characterized in that** the first arm (21) is rotatably mounted at one end to the first rotary bearing (25) and bears the first arm suction cup (23) at its opposite free end.

5. Transferring device according to any of claims 1 to 4, **characterized in that** the second arm (22) is rotatably mounted to the second rotary bearing (26) at one end and bears the second arm suction cup (24) its opposite free end.

6. Transferring device according to any of claims 1 to 5, **characterized in that** the first suction cup (19) is arranged on a first housing (18a) and **in that** the first arm (21) is pivotally mounted on the first housing (18a) by means of the first rotary bearing (25).

7. Transferring device according to any of claims 1 to 6, **characterized in that** a second suction cup (20) is provided, which can be brought into contact with the object (K) to be picked up at a second suction cup contact surface (20a), the second suction cup (20) defining a second suction cup normal (SN₂) extending perpendicularly to the second suction cup contact surface (20a), which second suction cup normal extends at a distance from and parallel to the first suction cup normal (SN₁).

8. Transferring device according to claim 7, **characterized in that** the second suction cup (20) is arranged on a second housing (18b) and **in that** the second arm (22) is pivotally mounted on the second housing (18b) by means of the second rotary bearing (26).

9. Transferring device according to claim 8, **characterized in that** the first housing (18a) and the second housing (18b) are arranged on a common carrier part (16).

10. Transferring device according to any of claims 1 to 9, **characterized in that** the gripping device (15) is mounted on a collaborative robot (cobot) (12).

11. Transferring device according to claim 10, **characterized in that** the cobot (12) is designed as a multi-articulated arm robot.

12. Method for picking up a cuboid object (K) in a tube filling machine using a transferring device according to any of claims 1 to 11, wherein the first suction cup (19) is brought into contact with a first object surface (OF₁), wherein the first arm suction cup (23) is brought into contact with a second object surface (OF₂) that extends perpendicularly to the first object surface (OF₁), wherein the object (K) is then detected at the first object surface (OF₁) by means of the first suction cup (19) and detected at the second object surface (OF₂) by means of the first arm suction cup (23) and transferred into a position in which a third object surface (OF₃), which is opposite to the second object surface (OF₂) and is arranged parallel to this surface, is accessible, wherein the object (K) is then additionally detected and picked up at the third object surface (OF₃) by means of the second arm suction cup (24).

## Revendications

1. Dispositif de transfert comportant un dispositif de préhension (15) réglable qui présente au moins une première ventouse (19), laquelle peut être sollicitée par pression négative et peut être mise en contact avec la surface d'un objet (K) à recevoir sur une première surface de contact de ventouse (19a), la première ventouse (19) définissant une normale de ventouse (SN₁) s'étendant perpendiculairement à la première surface de contact de ventouse (19a), un premier bras (21) étant prévu, lequel étant monté pivotant autour d'un axe de rotation (D) dans un premier palier de rotation (25) et supportant une première ventouse de bras (23), la première ventouse de bras (23) présentant une première surface de contact de ventouse de bras (23a) et définissant une première normale de ventouse de bras (ASN₁) s'étendant perpendiculairement à la première surface de contact de ventouse de bras (23a), **caractérisé en ce**
**qu'**un second bras (22) est prévu, lequel est disposé à l'écart du premier bras (23) et supporte une seconde ventouse de bras (24), la seconde ventouse de bras (24) présentant une seconde surface de contact de ventouse de bras (24a) et définissant une seconde normale de ventouse de bras (ASN₂) s'étendant perpendiculairement à la seconde surface de contact de ventouse de bras (24a), laquelle normale de ventouse de bras s'étendant parallèlement à la première normale de ventouse de bras (ASN₁), **en ce que** la première ventouse de bras (23) et la seconde ventouse de bras (24) se font face, et, **en ce que** l'axe de rotation (D) s'étend perpendiculairement à la première normale de ventouse (SN₁), **en ce que** la première normale de ventouse de bras (ASN₁) s'étend parallèlement à l'axe de rotation (D), **en ce que** le second bras (22) est monté pivotant autour de l'axe de rotation (D) ou d'un axe parallèle à celui-ci dans un second palier de rotation (26), **en ce que** la seconde normale de ventouse de bras (ASN₂) s'étend parallèlement à l'axe de rotation (D) et **en ce que** le premier bras (21) est déplaçable le long de son axe de rotation (D) et/ou **en ce que** le second bras (22) est déplaçable le long de son axe de rotation (D).

2. Dispositif de transfert selon la revendication 1, **caractérisé en ce que** le premier bras (21) et le second bras (22) peuvent pivoter indépendamment l'un de l'autre.

3. Dispositif de transfert selon la revendication 1 ou 2, **caractérisé en ce que** le premier bras (21) et le second bras (22) sont déplaçables le long de leur axe de rotation (D) indépendamment l'un de l'autre.

4. Dispositif de transfert selon l'une des revendications 1 à 3, **caractérisé en ce que** le premier bras (21) est monté rotatif à l'une de ses extrémités avec le premier palier de rotation (25) et supporte la première ventouse de bras (23) à son extrémité libre opposée.

5. Dispositif de transfert selon l'une des revendications 1 à 4, **caractérisé en ce que** le second bras (22) est monté rotatif à l'une de ses extrémités avec le second palier de rotation (26) et supporte la seconde ventouse de bras (24) à l'une de ses extrémités libres opposées.

6. Dispositif de transfert selon l'une des revendications 1 à 5, **caractérisé en ce que** la première ventouse (19) est disposée sur un premier boîtier (18a) et **en ce que** le premier bras (21) est fixé pivotant au premier boîtier (18a) par l'intermédiaire du premier palier de rotation (25).

7. Dispositif de transfert selon l'une des revendications 1 à 6, **caractérisé en ce qu'**une seconde ventouse (20) est prévue, laquelle peut être mise en contact avec l'objet (K) à recevoir sur une seconde surface de contact de ventouse (20a), la seconde ventouse (20) définissant une seconde normale de ventouse (SN₂) s'étendant perpendiculairement à la seconde surface de contact de ventouse (20a), laquelle normale de ventouse s'étendant à distance de et parallèlement à la première normale de ventouse (SN₁).

8. Dispositif de transfert selon la revendication 7, **caractérisé en ce que** la seconde ventouse (20) est disposée sur un second boîtier (18b) et **en ce que** le second bras (22) est fixé pivotant au second boîtier (18b) par l'intermédiaire du second palier de rotation (26).

9. Dispositif de transfert selon la revendication 8, **caractérisé en ce que** le premier boîtier (18a) et le second boîtier (18b) sont disposés sur une partie de support commune (16).

10. Dispositif de transfert selon l'une des revendications 1 à 9, **caractérisé en ce que** le dispositif de préhension (15) est fixé à un robot collaboratif (cobot) (12).

11. Dispositif de transfert selon la revendication 10, **caractérisé en ce que** le cobot (12) est conçu sous la forme d'un robot à bras à multiples articulations.

12. Procédé permettant la réception d'un objet (K) parallélépipédique dans une machine de remplissage de tubes comportant un dispositif de transfert selon l'une des revendications 1 à 11, dans lequel la première ventouse (19) est mise en contact avec une première surface d'objet (OF₁), la première ventouse de bras (23) étant mise en contact avec une deuxième surface d'objet (OF₂), laquelle s'étendant perpendiculairement à la première surface d'objet (OF₁), l'objet (K) étant ensuite saisi et placé dans une position sur la première surface d'objet (OF₁) au moyen de la première ventouse (19) et sur la deuxième surface d'objet (OF₂) au moyen de la première ventouse de bras (23), dans laquelle position une troisième surface d'objet (OF₃), qui est disposée opposée à la deuxième surface d'objet (OF₂) et parallèle à celle-ci, étant accessible, puis l'objet (K) étant en plus saisi et reçu sur la troisième surface d'objet (OF₃) au moyen de la seconde ventouse de bras (24).
